# EUROPEAN PATENT APPLICATION

(11) **EP 4 607 383 A1**
(43) Date of publication of application: **27.08.2025**
(21) Application number: 25159208.5
(22) Date of filing: 20.02.2025
(51) Int. Cl.: G06F 21/55, G06F 21/56, H04L 9/40, G06F 21/53, G06F 21/57

(54) **SYSTEMS AND METHODS FOR DETECTING AND ENFORCING COMPUTER RUNTIME SECURITY**

(30) Priority: 23.02.2024 US 202463557095 P; 27.05.2024 US 202463652075 P; 02.01.2025 US 202519007587
(71) Applicant: Jfrog Ltd., 4250465 Netanya (IL)
(72) Inventor: EZRA, Asaf, 6266617 De Haas 8th, Tel Aviv (IL); MENASHE, Shachar, 4813937 Shaike Ofir 10, Rosh Haayin (IL); AVRAHAM, Yinon, 4250465 Netanya (IL); ROZENBOIM, Yaniv, 4493000 Ramat Hakovesh (IL)
(74) Representative: Pearl Cohen Zedek Latzer Baratz UK LLP

(57) **Abstract**

A system and method for runtime detection of threats to a computer system, including, for example: collecting, by a software agent, operating system information items describing a runtime environment; correlating the collected information items with software component information items, describing components deployed in the runtime environment; and identifying a risky execution of a computer application based on the correlating of information items. Some embodiments of the invention may be applied to or be integrated with a Kubernetes cluster, where software agents may be installed or be integrated with specific controllers and/or nodes. Some embodiments may include correlating or integrating information collected by different software agents, as well as defining and using a threat detection model - which may include, e.g., different criteria and priorities to further fine-tune threat detection.

## Description

### PRIOR APPLICATION DATA

The present application claims benefit from prior US provisional application 63/557,095, filed on February 23, 2024, and from prior US provisional application 63/652,075, filed on May 27, 2024, each incorporated by reference in its entirety.

### FIELD OF THE INVENTION

The present invention relates generally to detection and prevention of threats in a computer system, and more specifically to detecting and preventing threats in software deployment and runtime environments.

### BACKGROUND OF THE INVENTION

Various existing software security and vulnerability scanning tools may allow examining source code and binary registries for identifying security vulnerabilities in software components and artifacts. However, visibility into runtime environments and actual process executions by software components occurring, e.g., outside their "sterile" development environment may be limited due to lack of appropriate runtime security monitoring tools. In addition, due to the vast number of security issues and threats that may be identified upon scanning, some issues might be undesirably prioritized without considering which threats directly impact the applications of software components in their runtime environments (in other words, it may be desirable to prioritize more immediate threats in runtime environments over less immediate, relatively minor threats outside this environment). There is thus a need for software security and vulnerability scanning tools allowing to efficiently and effectively monitor information from deployment and/or runtime environments, which may allow quick handling of software security issues within these environments.

### BRIEF SUMMARY OF INVENTION

A system and method for runtime detection of threats to a computer system may include collecting, by a software agent, operating system information items, where the collected information may describe, e.g., a runtime environment and/or a plurality of kernel events in such an environment; correlating the collected information items with software component information items, where one or more of the software component information items may describe, for example, components deployed in the runtime environment; and identifying a risky execution of a computer application based on the correlating of information items.

Some embodiments of the invention may be applied to or be integrated with a Kubernetes cluster, where software agents may be installed or be integrated with specific controllers and/or nodes, and where collected information items may describe, e.g., different workloads, nodes, pods, and the like. Some embodiments may include correlating or integrating information collected by different software agents as part of the thread detection process, as well as defining and using a threat detection model - which may include, e.g., different criteria and priorities to further fine-tune threat detection.

In some embodiments, one or more of the collected information items describe a plurality of kernel events, the events including at least one of: a process initiation event, a process termination event, and an open file event.

In some embodiments, the runtime environment is a Kubernetes cluster, and wherein the method comprises: matching one or more of the collected information items with second information items collected from one or more second agents, the matching comprising associating one or more process information items with one or more container information items.

In some embodiments, one or more of the second agents is a Kubernetes runtime controller, and wherein one or more of the second information items describe at least one of: a pod, a workload, and a node.

In some embodiments, at least one of: the software agent, and the one or more second agents are installed on each of a plurality of nodes, the plurality of nodes supervised by the Kubernetes runtime controller.

In some embodiments, the method comprises transmitting an alert to a computer system separate from the processor, the transmitting using a secure gRPC connection.

In some embodiments, identifying a risky execution of a computer application comprises determining a location of one or more software artifacts based on the correlating the collected information items.

In some embodiments, the method comprises preventing access to a computer file based on the determined location.

According to one or more embodiments there is also provided a computerized system for runtime detection of threats to a computer system, the system comprising: a memory, and a computer processor configured to: collect, by a software agent, one or more operating system information items, the collected information describing a runtime environment; correlate the collected information items with one or more software component information items, wherein one or more of the software component information items describe one or more components deployed in the runtime environment; and identify, based on the correlating of information items, a risky execution of a computer application.

In some system embodiments, one or more of the collected information items describe a plurality of kernel events, the events including at least one of: a process initiation event, a process termination event, and an open file event.

In some system embodiments, the runtime environment is a Kubernetes cluster, and wherein the computer processor is configured to: match one or more of the collected information items with second information items gathered from one or more second agents, the matching comprising associating one or more process information items with one or more container information items.

In some system embodiments, one or more of the second agents is a Kubernetes runtime controller, and wherein one or more of the second information items describe at least one of: a pod, a workload, and a node.

In some system embodiments, at least one of: the software agent, and the one or more second agents are installed on each of a plurality of nodes, the plurality of nodes supervised by the Kubernetes runtime controller.

In some system embodiments, the computer processor is configured to transmit an alert to a computer system separate from the processor, the transmitting using a secure gRPC connection.

In some system embodiments, identifying a risky execution of a computer application comprises determining a location of one or more software artifacts based on the correlating the collected information items.

In some system embodiments the computer processor is configured to prevent access to a computer file based on the determined location.

According to one or more embodiments there is also provided a computerized method of runtime environment security, the method comprising, using a computer processor: gathering, by a software agent, one or more operating system data items, the gathered data describing a plurality of kernel events in a computerized runtime environment; integrating the collected data items with one or more software component analysis information items, wherein one or more of the software component analysis information items describe one or more artifacts included in the runtime environment; and detecting, based on the integrating of information items, a threat to the runtime environment.

In some embodiments, the method comprises: associating one or more of the gathered information items with second information items collected from one or more second agents, the associating between one or more process information items and one or more container information items.

In some embodiments, the detecting of a threat to the runtime environment comprises determining a location of one or more of the artifacts based on the integrating of the gathered information items.

In some embodiments, the method comprises blocking access to a computer file based on the determined location.

### BRIEF DESCRIPTION OF THE DRAWINGS

Non-limiting examples of embodiments of the disclosure are described below with reference to figures attached hereto. Dimensions of features shown in the figures are chosen for convenience and clarity of presentation and are not necessarily shown to scale. The subject matter regarded as the invention is particularly pointed out and distinctly claimed in the concluding portion of the specification. The invention, however, both as to organization and method of operation, together with objects, features, and advantages thereof, can be understood by reference to the following detailed description when read with the accompanied drawings. Embodiments are illustrated without limitation in the figures, in which like reference numerals may indicate corresponding, analogous, or similar elements, and in which:
Fig. 1 is a high-level block diagram of an exemplary computing device which may be used with embodiments of the present invention;
Fig. 2 shows an example infrastructure for a runtime environment security solution according to some embodiments of the invention;
Fig. 3 shows an example deployment of software agents on a Kubernetes cluster according to some embodiments of the invention;
Fig. 4 shows an example installation of a software agent according to some embodiments of the invention;
Fig. 5 shows an example multi-component runtime security system diagram according to some embodiments of the invention;
Figs. 6A-C show example runtime security information provided according to some embodiments of the invention;
Fig. 7 shows an example method for runtime detection of threats to a computerized system according to some embodiments of the invention; and
Fig. 8 shows an example runtime audit model according to some embodiments of the invention.

It will be appreciated that for simplicity and clarity of illustration, elements shown in the figures have not necessarily been drawn accurately or to scale. For example, the dimensions of some of the elements can be exaggerated relative to other elements for clarity, or several physical components can be included in one functional block or element.

### DETAILED DESCRIPTION

In the following detailed description, numerous specific details are set forth in order to provide a thorough understanding of the invention. However, it will be understood by those skilled in the art that the present invention can be practiced without these specific details. In other instances, well-known methods, procedures, components, modules, units and/or circuits have not been described in detail so as not to obscure the invention.

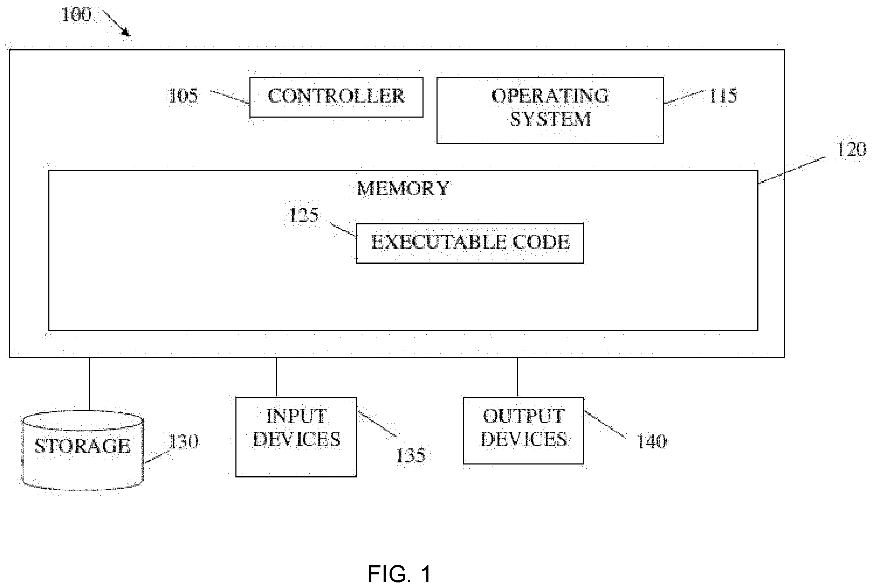

Fig. 1 shows a high-level block diagram of an exemplary computing device which may be used with embodiments of the present invention. Computing device 100 may include a controller or computer processor 105 that may be, for example, a central processing unit processor (CPU), a chip or any suitable computing device, an operating system 115, a memory 120, a storage 130, input devices 135 and output devices 140 such as a computer display or monitor displaying for example a computer desktop system.

Operating system 115 may be or may include code to perform tasks involving coordination, scheduling, arbitration, or managing operation of computing device 100, for example, scheduling execution of programs. Memory 120 may be or may include, for example, a Random Access Memory (RAM), a read only memory (ROM), a Flash memory, a volatile or non-volatile memory, or other suitable memory units or storage units. Memory 120 may be or may include a plurality of different memory units. Memory 120 may store for example, instructions (e.g. code 125) to carry out a method as disclosed herein, and/or data such as low-level action data, output data, etc.

Executable code 125 may be any application, program, process, task, or script. Executable code 125 may be executed by controller 105 possibly under control of operating system 115. For example, executable code 125 may be or execute one or more applications performing methods as disclosed herein. In some embodiments, more than one computing device 100 or components of device 100 may be used. One or more processor(s) 105 may be configured to carry out embodiments of the present invention by for example executing software or code. Storage 130 may be or may include, for example, a hard disk drive, a floppy disk drive, a compact disk (CD) drive, a universal serial bus (USB) device or other suitable removable and/or fixed storage unit. Storage 130 may include cloud-based storage. Data described herein may be stored in a storage 130 and may be loaded from storage 130 into a memory 120 where it may be processed by controller 105.

Input devices 135 may be or may include a mouse, a keyboard, a touch screen or pad or any suitable input device or combination of devices. Output devices 140 may include one or more displays, speakers and/or any other suitable output devices or combination of output devices. Any applicable input/output (I/O) devices may be connected to computing device 100, for example, a wired or wireless network interface card (NIC), a modem, printer, a universal serial bus (USB) device or external hard drive may be included in input devices 135 and/or output devices 140.

Embodiments of the invention may include one or more article(s) (e.g. memory 120 or storage 130) such as a computer or processor non-transitory readable medium, or a computer or processor non-transitory storage medium, such as for example a memory, a disk drive, or a USB flash memory encoding, including, or storing instructions, e.g., computer-executable instructions, which, when executed by a processor or controller, carry out methods and procedures disclosed herein.

Some embodiments of the invention may allow, for example: collecting or gathering, by a software agent, one or more operating system information items, where the collected information may describe a runtime environment; correlating the collected information items with software component information items (which may be or may include, for example, software composition analysis (SCA) data or information describing components or artifacts included or deployed in the runtime environment); and identifying, based on the correlating of information items, a risky execution of a computer.

A software agent may be, for example, a software object in the sense of objected oriented programming. A software agent may be a computer program, or a part of a computer program. In some non-limiting examples, a software agent may be a custom Kubernetes resource (e.g. class of objects defined using a custom resource definition, CRD).

Some embodiments of the invention may allow for detecting threats to computerized environments (such as for example runtime environments) based on data or information items describing, e.g., software releases, pre-known threats (for example based on software composition analysis; or SCA), and actual exposures to threats in runtime or deployment environments. By providing real-time observability into runtime environments (such as for example according to the various protocols and procedures described herein), and by integrating different types of information items received from different sources (e.g. analysing information items together in a wider context, for example analysing one information item together with other information items of a different type), some embodiments may enable to handle and prioritize security events and for example reduce times required for handling prominent threats or security events (as may be measured, for example according to a mean time to recovery (MTTR) from a set of threat- or security-related events) - for example according to the various protocols and procedures described herein.

An event according to some embodiments may refer for example to a computer task or operation being executed by a computer system or component (such as for example a node being monitored such as described herein), and/or to a plurality of such tasks or operations (which may for example be considered part of a single computerized process). Some examples of an event according to some embodiments of the invention may include, e.g., accessing or opening a file by a computer system, executing a segment of code, processing and/or performing calculations based on an input, and the like. Some example events may be computer tasks or operations which may be described by data collected by some embodiments of the invention such as, e.g., described herein.

Some embodiments of the invention may monitor or detect active software components or entities that may be integral to the execution flow within the runtime environment, and may allow for detecting threats to computer systems in runtime environments. As further described herein, detection may occur in real-time, which may allow for immediate responsiveness. Real-time as understood in real-time computing (RTC) typically corresponds to an event to system response on the order of milliseconds or microseconds. In some embodiments, information gathered may be collected in or transmitted to a runtime service, where it may be integrated into a comprehensive model and augmented with additional data or information items from additional components. This enriched or correlated information may then be presented in various formats, and various automated actions may be taken based on the correlated or integrated information.

The various programs and/or protocols described herein may be executed on a plurality of computerized systems (such as for example machines and/or nodes in a computerized cluster or Kubernetes cluster - see further discussion herein), which may, e.g., be distinct and physically separate from one another and for example connected over a communication or data network.

In some embodiments, data or information items collected from a plurality of computerized systems or environments may be integrated or correlated by a software component which may be referred to herein as a "runtime service". In some embodiments, the runtime service may be responsible for collecting data or information items from the monitored environments, storing this information and/or items in a database, and enriching or correlating the collected information with additional data or information items (which, e.g., may not be associated with the particular runtime environment monitored). In some example embodiments, a persistent runtime database (such as for example a structured query language (SQL) postgres database) may be utilized by the runtime service to store and retrieve runtime data.

In some embodiments, and as further described herein, the runtime service may correlate or integrate runtime information (which may for example be collected by, and/or received from, a plurality of software agents or "sensors") with data from additional services or components - which may enable, for example, the identification of various software artifacts, pinpointing or determining the location in a given database, repository, container or disk image, or registry where these artifacts are stored, and considering various security related factors which may not be available, or may not be collected from the runtime environment. Correlating or integrating different types of information by some embodiments of the invention may offer real time insights into the security status of specific runtime artifacts - which may be or may include, for example, disk images, workloads and processes, files or documents, as well as additional or alternative artifacts used or included in the runtime environment.

In some embodiments, data or information items collected from multiple sources may be correlated, integrated or combined into a unified threat detection data model - which may include or involve, for example, using identifiers for the various entities associated with different information items and types of such items, in addition to additional or alternative predetermined settings and preferences. This may enable, for example, matching data collecting entities and/or data associated with relevant entities with each other - which may be used for creating a holistic picture including information from a plurality of relevant sources or entities. In some embodiments, identifiers of each entity type may, e.g., be created based on intrinsic attributes of each entity - which may facilitate matching different entities in a coherent manner such as for example described herein. For example, correlating information from software agents A1, A2 such that it is known that A1 and A2 monitor the same runtime environment, despite being installed on different containers/machines/etc. and not receiving any information from each other.

Some embodiments of the invention may include creating and collecting data or information items using a runtime auditing agent, which may simply be referred to as an "agent" or "agents" herein. An auditing agent may be an example of a software agent.

In some embodiments, the agent may be installed and executed on a given runtime environment that is to be monitored - such as for example a container or a machine (which may be virtual and/or physical). The agent may monitor the execution of processes and/or applications in the runtime environment - for example by collecting operating system data or information items in real-time. Some example operating system information items may describe, e.g., initiation and termination of processes, files (such as for example executables) included in the monitored environment, files used or accessed by relevant processes or tasks, and additional or alternative events associated with the operating system.

In some embodiments of the invention, one or more of the collected information items describe a plurality of kernel events, the events including at least one of: a process initiation event, a process termination event, and an open file event. For instance, in some embodiments, collected or gathered data or information items may describe a plurality of kernel events, including, e.g., process initiation events, process termination events, and file access (e.g., "open file") events which may for example take place in the computerized relevant runtime environment or Kubernetes cluster (see also examples cases provided herein).

Some embodiments of the invention may include collecting, by a software agent, one or more operating system information items, the collected information describing a runtime environment.

For example, in some embodiments, the software agent may employ or use an extended Berkeley packet filter (eBPF) trace point to collect event data or information items such as for example kernel events - which may include, e.g., process initiation and termination, file access or "open file" events, and additional or alternative operating system data or information. In some embodiments, agents may collect or document information from the /proc filesystem, and may be employing or using various code instrumentation procedures for appropriate software stacks or components and/or relevant artifacts. In order to allow monitoring of runtime environments in real time, some embodiments may include collecting data by agents, and sending or transmitting data from agents to the relevant runtime service - for example once in a predetermined time interval, such as for example every 2 minutes. Additional or alternative trace point frameworks and/or operating system or filesystem monitoring techniques may be used in different embodiments of the invention.

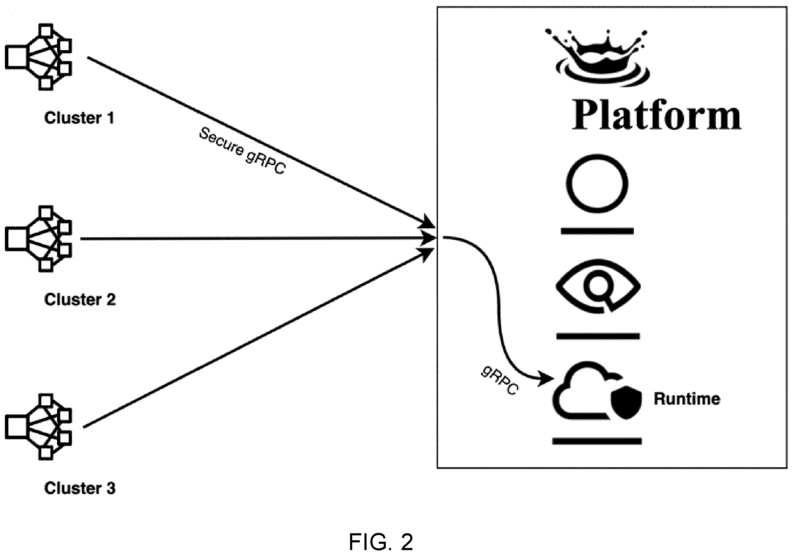

Fig. 2 shows an example infrastructure for a runtime environment security solution according to some embodiments of the invention. In this example, agents may be installed or deployed on each of a plurality of computerized clusters (which may for example be Kubernetes clusters such as for example described herein), and may for example send or transmit event data or information items to a runtime service or relevant platform (where, e.g., event data may be correlated with or connected to additional information such as for example described here). In some embodiments, communication between computerized clusters and the relevant service or platform may, for example, be performed using secure connections such as for example using Google's remote procedure calls (gRPC) - which may allow, e.g., for efficient data transmission and low latency. Additional or alternative components and/or communication protocols may be used in different embodiments.

In some example embodiments, the runtime environment may be a Kubernetes cluster. For example, some embodiments of the invention may be embedded in, or integrated into, a Kubernetes environment - which may for example be a runtime environment monitored by embodiments of the invention. In such nonlimiting case, embodiments include or use several types of software agents for collecting runtime events, including, e.g., an audit controller agent (which may also be referred to as "controller") - which may for example be tailored to the Kubernetes environment and framework such as for example described herein.

In some embodiments of the invention, one or more of the software agents considered may be, may include, or may be installed on a Kubernetes runtime controller, and some information items (that may be, e.g., received by the software agents) may describe for example: pods, workloads, and nodes - for example within the relevant Kubernetes environment. However, while a Kubernetes environment is discussed as an example, other environments and computer systems may be used.

In nonlimiting cases where the monitored runtime environment is a Kubernetes cluster, a runtime controller may be utilized alongside runtime agents (which may be, e.g., two different types of software agents such as, e.g., described herein) - to collect Kubernetes-related information in real-time. In some embodiments, information collected from the runtime controller may be correlated or integrated with information received from the runtime agents. Such an integration may offer comprehensive visibility into the monitored cluster and its running computerized processes and applications.

In some embodiments, the controller may monitor cluster level events and activities, and may collect Kubernetes information in real-time, including for example the initiation and termination of pods, workloads, and nodes within the cluster.

In some embodiments of the invention, software agents such as for example runtime agents (which may collect information and for example be matched such as, e.g., described herein) may be installed on each of a plurality of nodes, the plurality of nodes supervised by the runtime controller (on which another agent, e.g., of a different type may be installed, such as for example described herein).

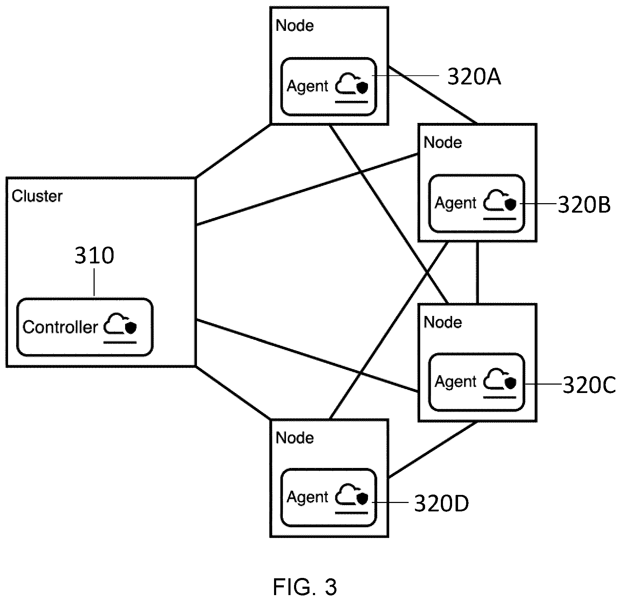

Fig. 3 shows an example deployment of software agents on a Kubernetes cluster according to some embodiments of the invention. In some nonlimiting embodiments within Kubernetes environments, software agents such as, e.g., runtime controllers may for example be installed or deployed as Kubernetes deployments (for example using a custom resource definition; CRD) and one controller 310 may be included in every cluster - while a plurality of software agents such as, e.g., runtime agents 320A-D may for example be installed or deployed as part of a Kubernetes Daemonset controllers, e.g., on each Kubernetes node within a cluster. Additional or alternative configurations and deployments may be used in different embodiments.

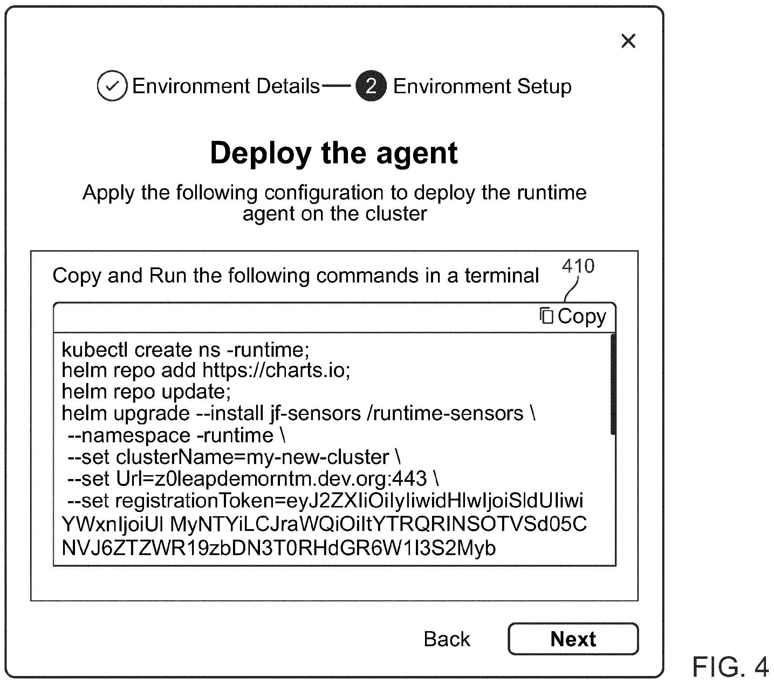

Fig. 4 shows an example installation of a software agent according to some embodiments of the invention. In some embodiments, software agents may be installed on computerized systems (such as for example virtual or physical machines or nodes in a Kubernetes cluster) for example by running a plurality of terminal commands appropriate to the runtime environment considered, which may for example be provided in a corresponding user interface (UI). In this particular example, terminal commands may be or may include a Kubernetes custom resource definition (CRD) 410, e.g., for a runtime agent (such as for example one of runtime agents 320A-D), which may for example be installed on each node in a corresponding Kubernetes cluster. Additional or alternative agent deployment or installation procedures may be used in different embodiments of the invention.

In some embodiments of the invention, collecting runtime or operating system information items may include matching a plurality of information items collected by a given agent with additional information items collected or gathered from a plurality of other or additional agents - which may for example be software agents such as for example described herein, but deployed and/or running on nodes and/or systems and/or components separate or different from those on which the given agent is running. With regard to a given agent collecting information, other agents, e.g., ones deployed or running on different components may be referred herein to as "second agents" or "additional agents"; the corresponding information items relating to the second agents may be referred to as "second information items" or "additional information items".

In some embodiments, the matching of information items may be or may include, e.g., associating information items of different types with one another (such as for example process information items with container information items). In some embodiments, matching or associating information items may be performed based on matching or correlating different agents with one another - which may for example include or involve organizing agents or entities in a hierarchical structure using unique entity identifiers such as for example described herein.

Some embodiments of the invention may include matching one or more of the collected information items with second information items collected from one or more second agents. For example, matching may include associating or correlating one or more process information items with one or more container information items, or making a determination they are similar or the same. In some embodiments, one or more of the second agents may be a Kubernetes runtime controller, and one or more of the second information items may describe at least one of: a pod, a workload, and a node. In some embodiments, at least one of: the software agent, and the one or more second agents are installed on each of a plurality of nodes, the plurality of nodes supervised by the runtime controller

For example, in some embodiments , runtime entities and/or information received from such entities may be organized and/or managed in a hierarchical or network structure. For example, a given entity may be associated with a unique identifier, which may be calculated or constructed based on intrinsic attributes or characteristics of the entity and/or the identifier of its parent entity, if it exists. Such identifiers may then be used to identify relationships between a plurality of entities of different types (such as for example a node being a "child of" or supervised by a controller - where both entities provide runtime information), and to correlate information received from such entities - which may for example be received at different times and describe a plurality of different events. For instance, in some embodiments of the invention, messages may be sent to a given runtime service from both the runtime agent and the runtime controller, for example including, or according to, or based on document event data or information items. Each message may carry information on specific items, such as software components, processes, tasks, files, machines, pods, nodes, workloads, and the like. The runtime service may then integrate or correlate the information it receives based on identifiers which may, e.g., be included in each received message (see also nonlimiting practical examples provided herein, e.g., in Tables 1-2).

Some embodiments of the invention may include correlating the collected information items with one or more software component information items, wherein one or more of the software component information items describe one or more components deployed in the runtime environment.

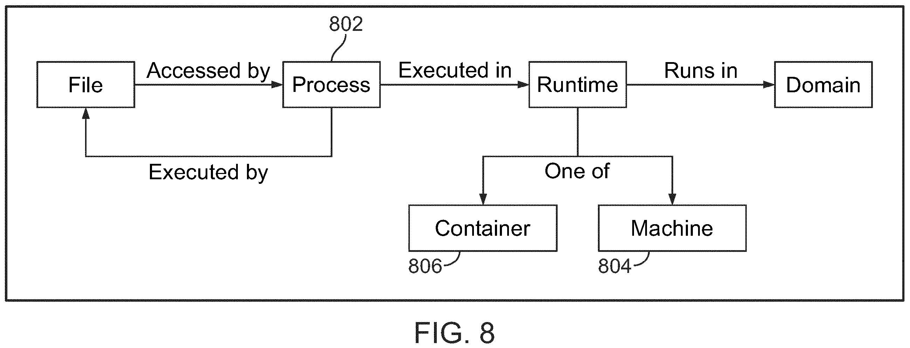

Fig. 8 shows an example runtime audit model according to some embodiments of the invention. In a nonlimiting example, a runtime agent may for example send information describing processes 802 running on a Kubernetes node/machine 804, while a runtime controller may send information describing the relevant Kubernetes container 806. However, the agent and controller may not communicate with each other - and each component may not consider event data collected from its counterpart component. The runtime service may therefore be responsible for correlating and matching the process 802 and/or machine 804 with the container 806 it may be running on, and correlating information describing one entity with information describing the other. The runtime service may receive for example the files' digest (which may for example be calculated and sent by the runtime agent) and container image name and digest (which may, e.g., be sent by the runtime controller) and correlate information received from these two sources according to identifiers such as for example according to the nonlimiting code example provided in Tables 1-2:

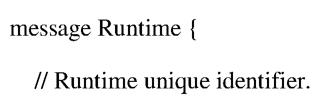

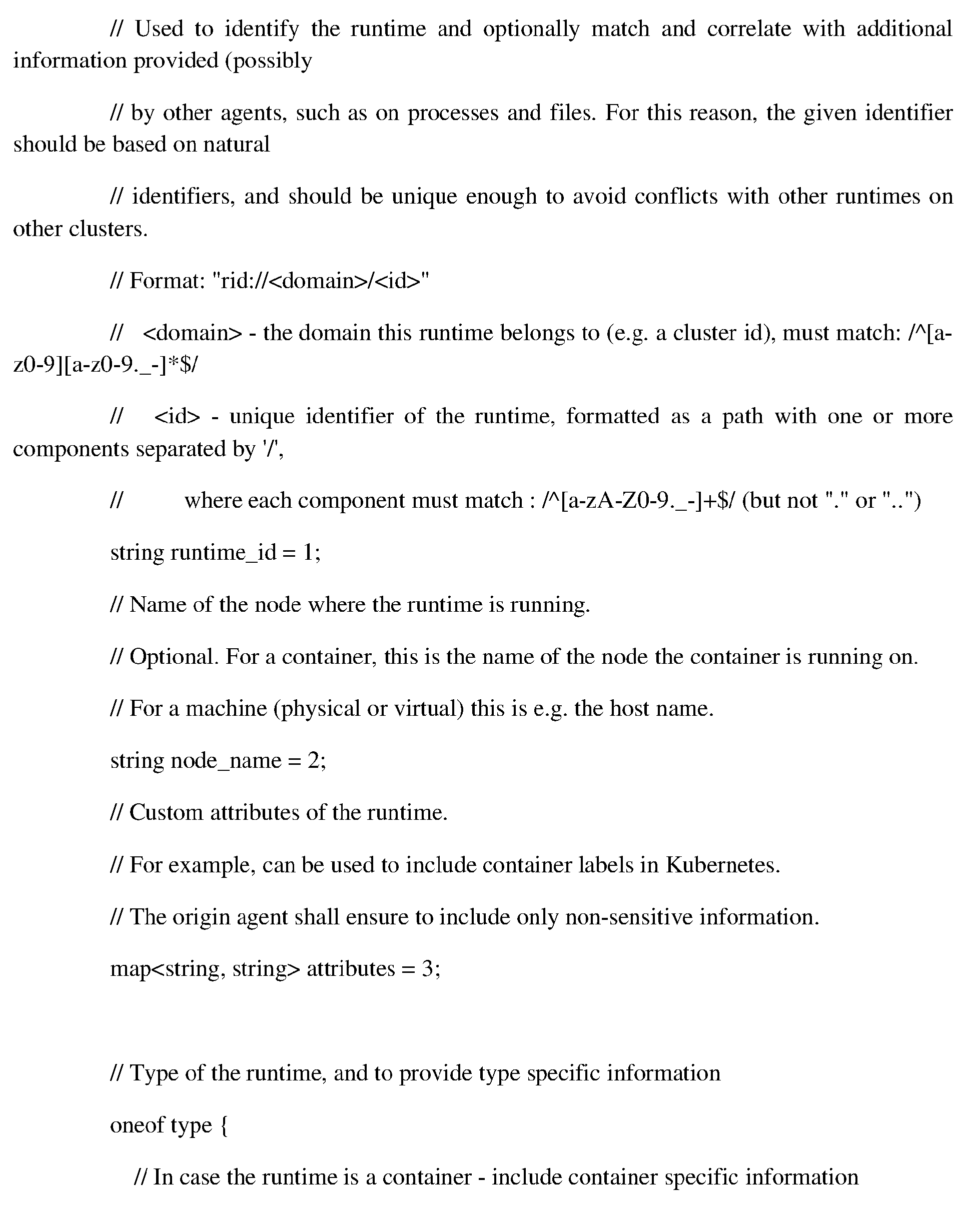

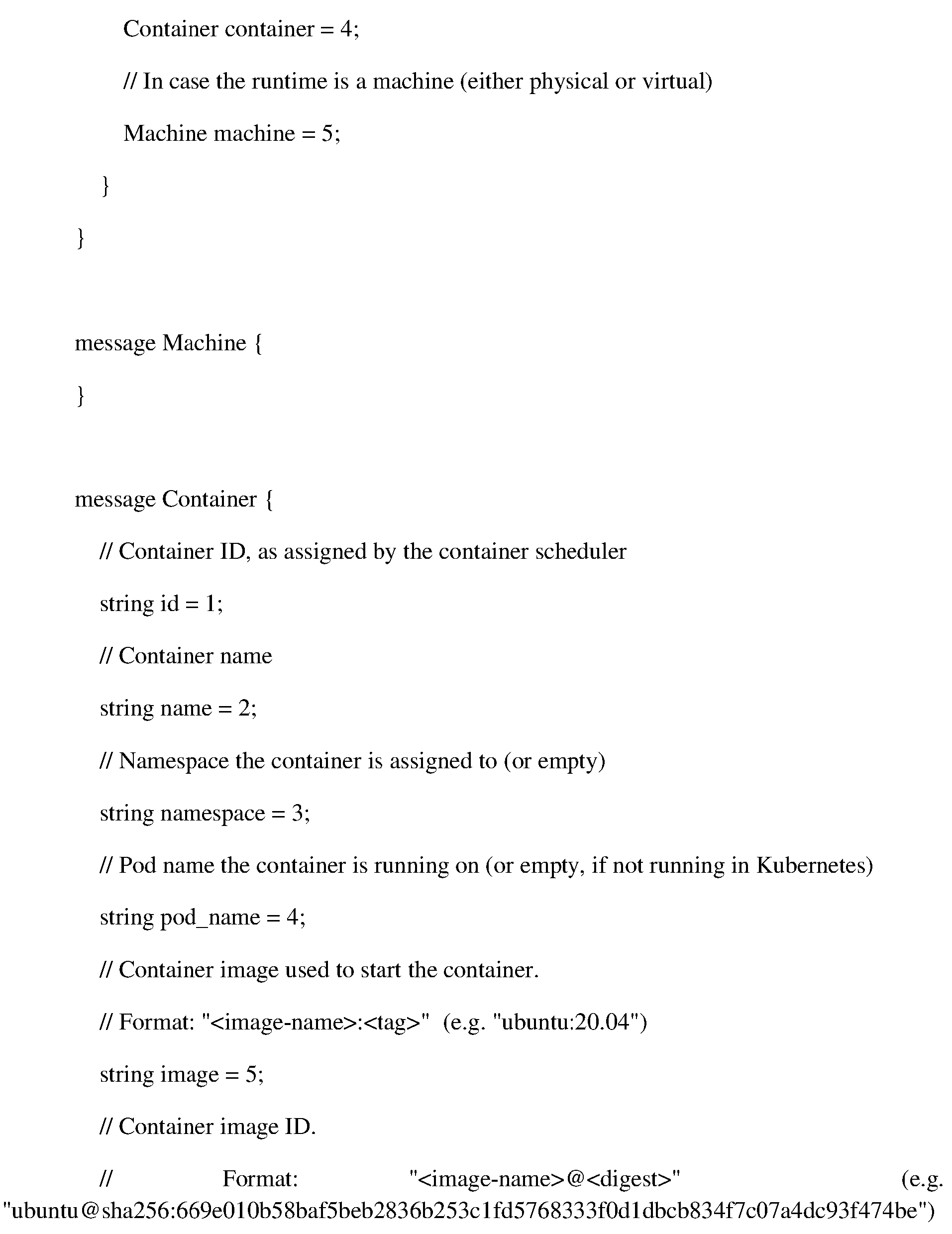

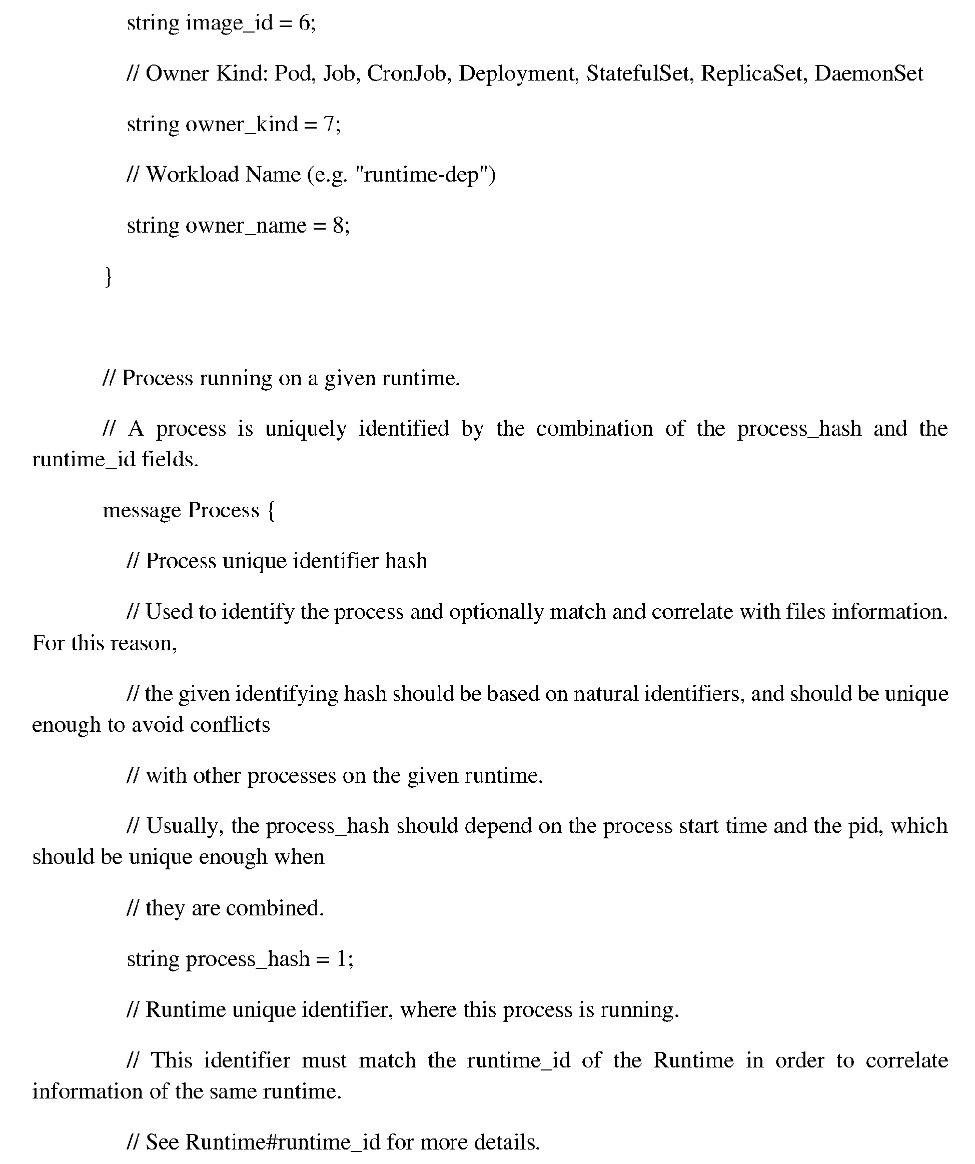

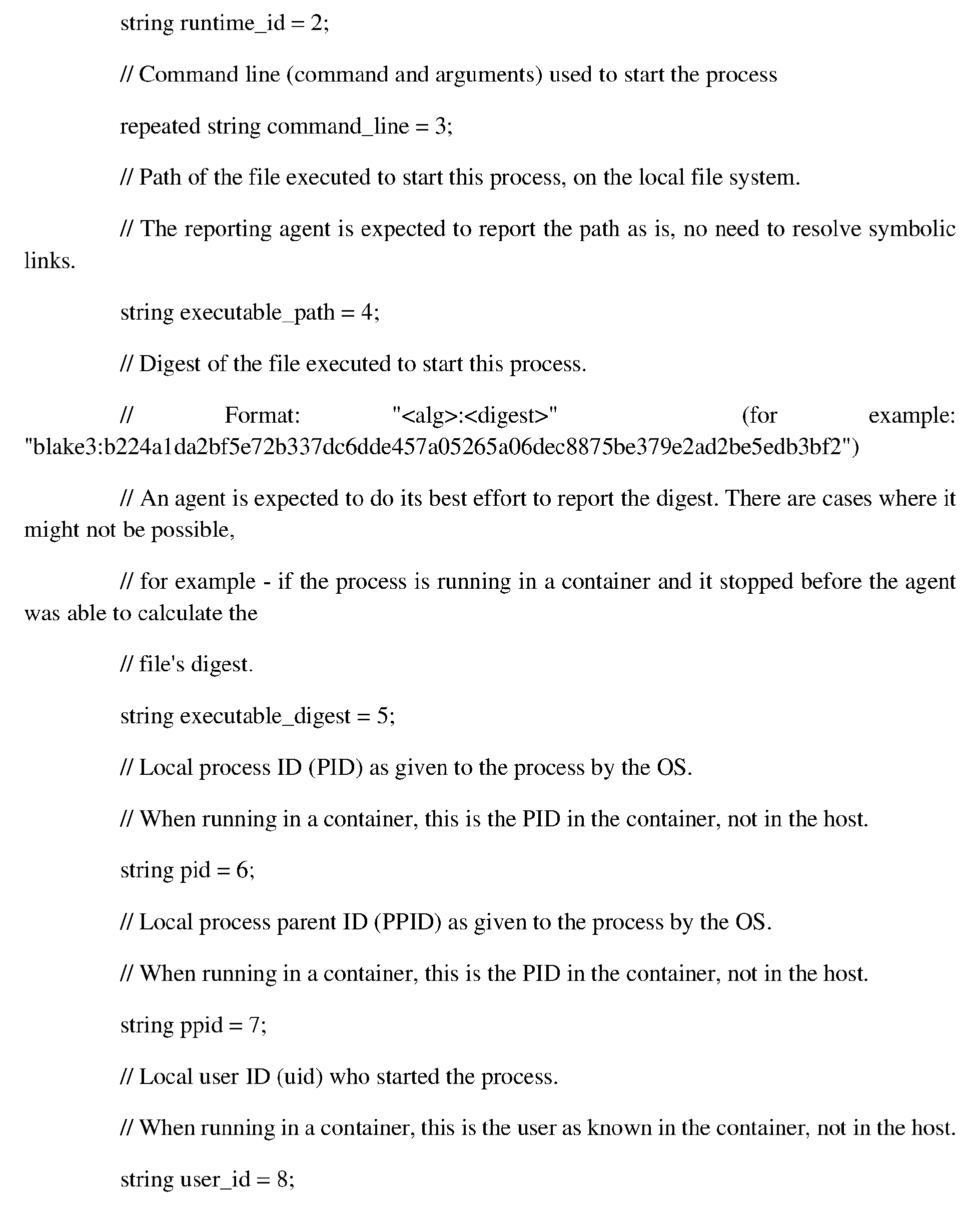

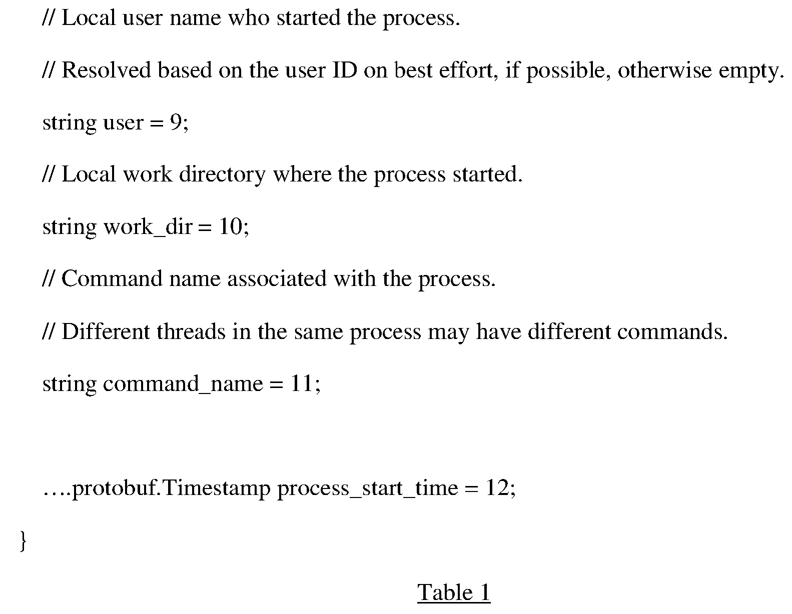

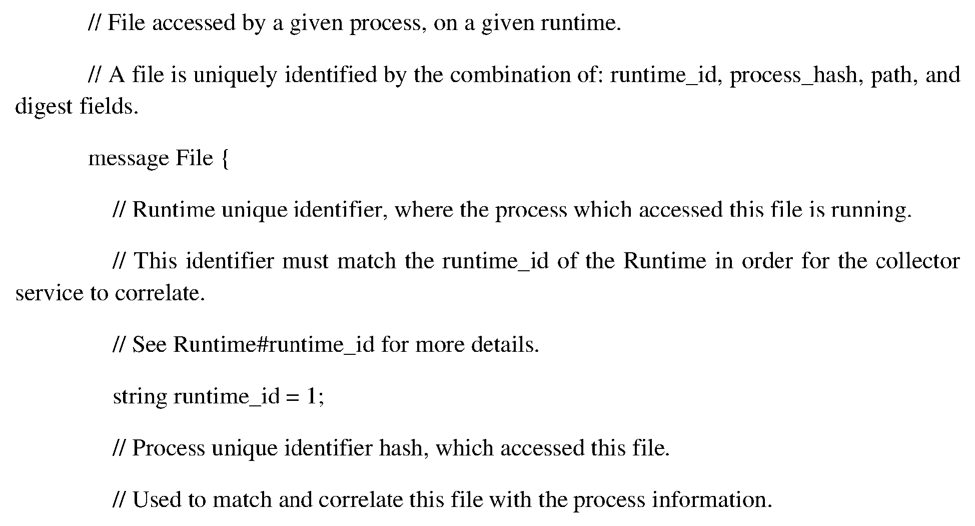

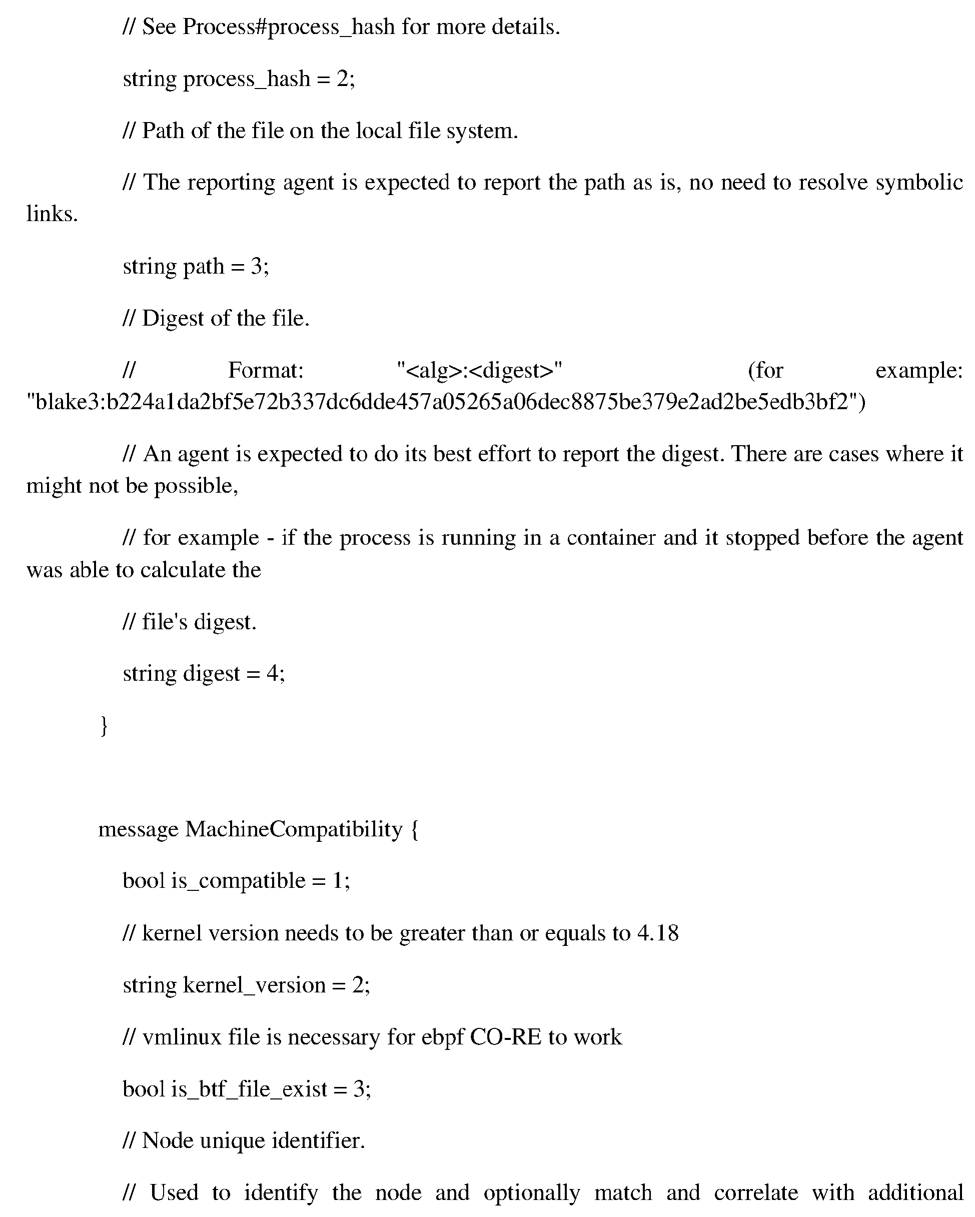

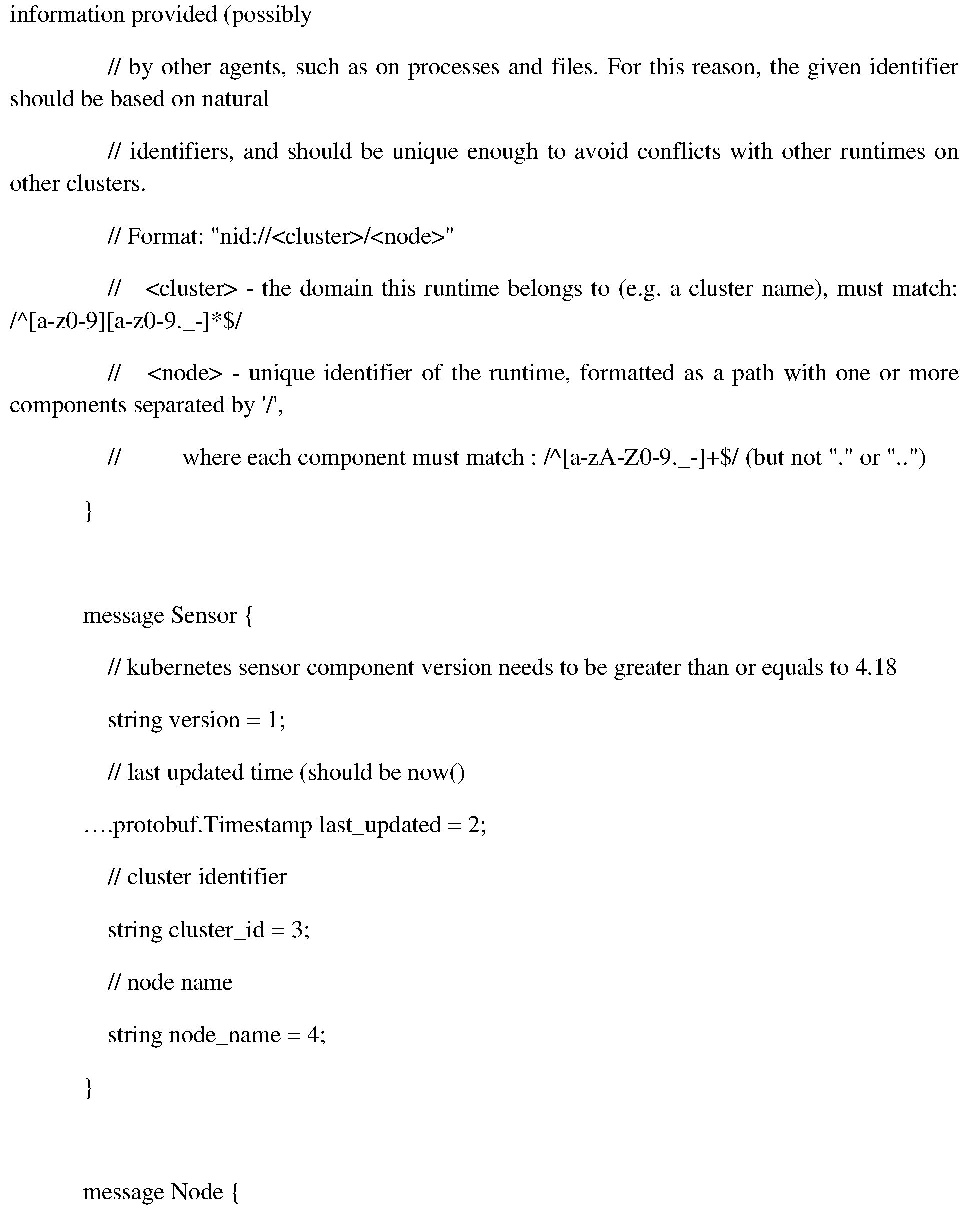

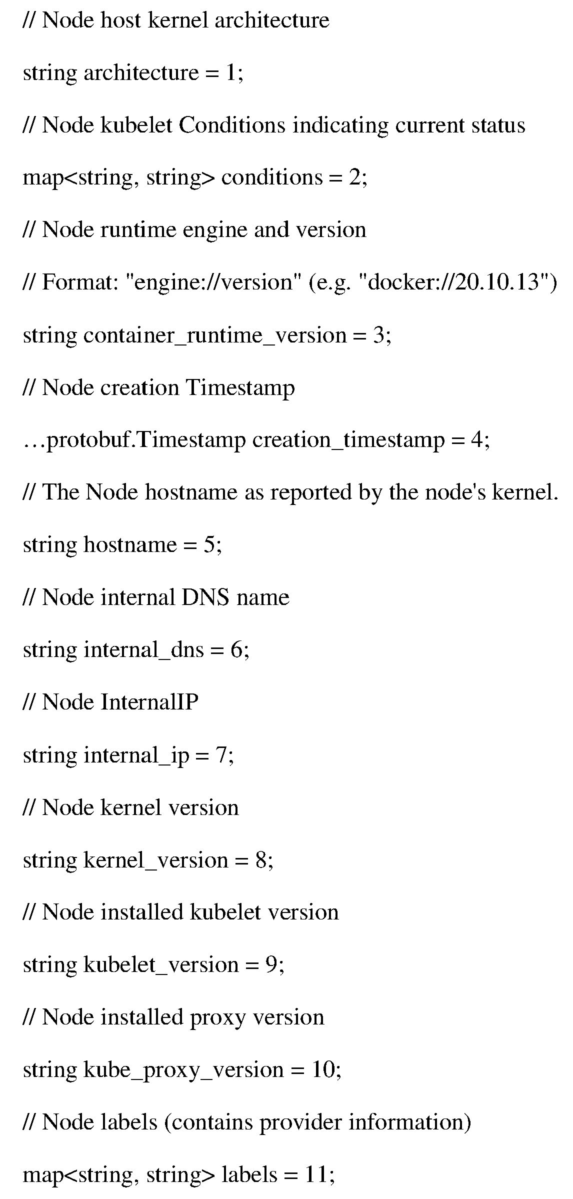

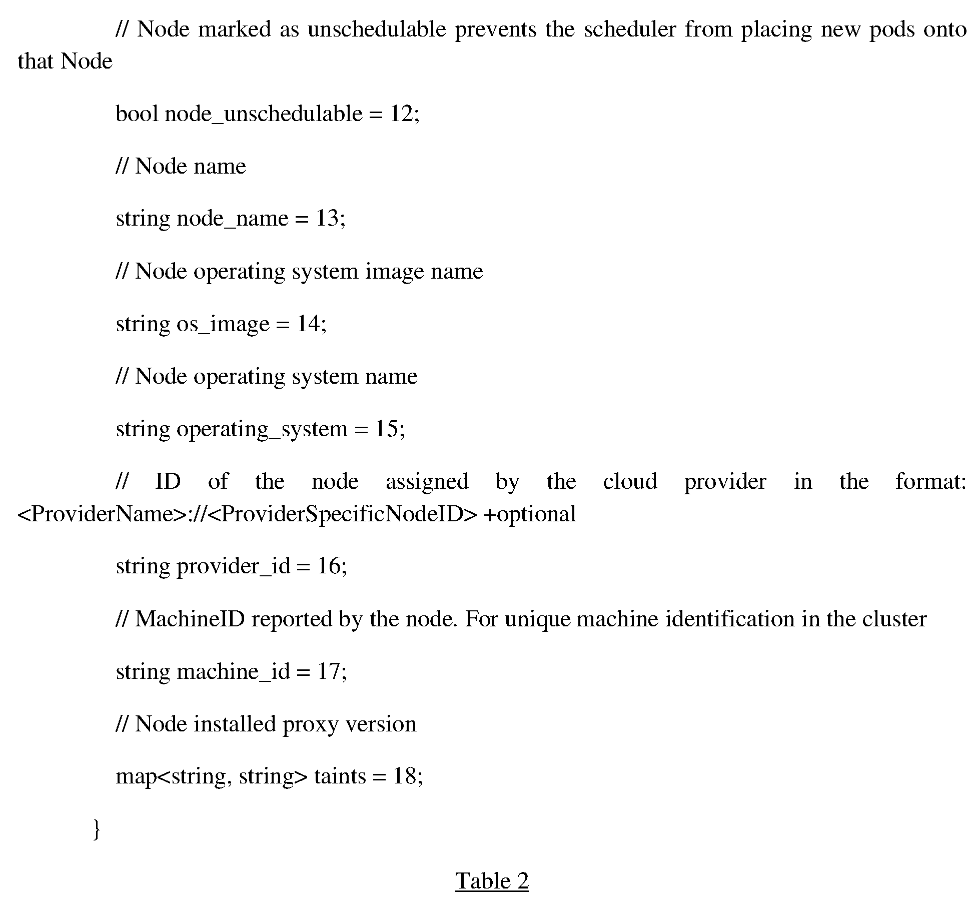

In the example provided in Tables 1-2, the main entities of the runtime model or environment may be defined in protocol buffers (or "protobufs" for short). This may include a runtime entity, which may be where processes are running, a process entity which may represent an execution of code, a file entity which may represent a file in the file system, (such as, e.g., either executable or other accessed file) and the like. Additional entities and/or entries which may describe or be included in the runtime environment, such as for example a node, the machine compatibility data, and sensor or agent data, may also be included. Additional or alternative examples for correlating or integrating information received from different agents or entities may be used in different embodiments of the invention.

In some embodiments, runtime information may be provided and/or correlated or integrated with relevant information from additional sources (e.g., in real time, or once in a predetermined time period, such as for example once in 5 minutes). Some example embodiments of the invention may for example include, or be integrated with, a software deployment and lifecycle management and monitoring suite or platform, which may offer or provide various tools for, and information describing, e.g., the distributing of software artifacts, binaries, and libraries throughout the software development lifecycle, as well as the optimizing for example the build, deployment, and release processes, as well as various SCA capabilities.

One nonlimiting example platform which may be included in, or integrated with some embodiments of the invention may be the JFrog platform, which may include, e.g., the JFrog Artifactory, JFrog Xray, and JFrog Catalog components - performing, e.g., various types of software composition analysis (SCA) and allowing, for example, to store, document, update, monitor, and scan various software components throughout a software development lifecycle (for example, in development and testing environments). Additional or alternative platforms, however, may be included in or integrated with different embodiments of the invention.

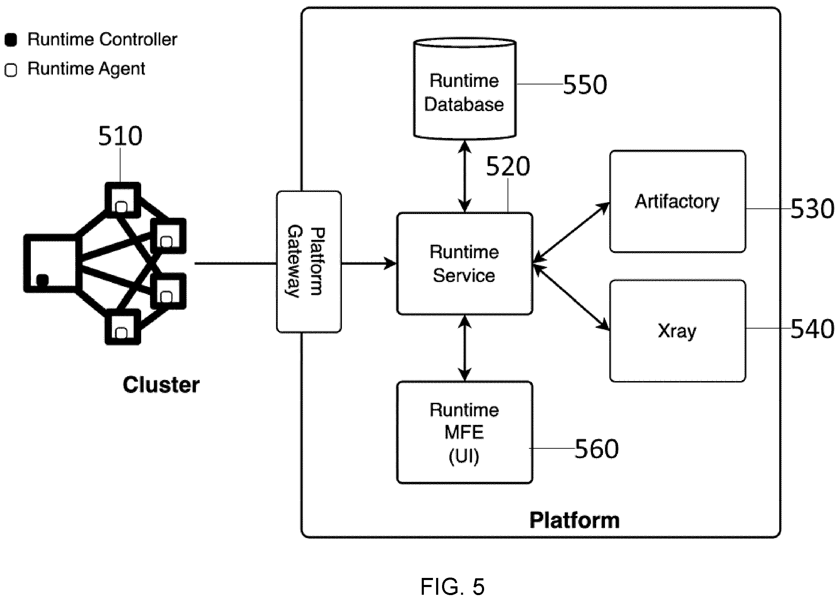

Fig. 5 shows an example multi-component runtime security system diagram according to some embodiments of the invention. Event data or information items may be collected, for example, from cluster 510 into runtime service 520, where it may be correlated or integrated with information from additional components - such as for example the example JFrog Artifactory 530 and Xray 540 platform components. Correlated and/or integrated information may be stored or documented in runtime database 550, and may for example be sent to or presented on a user interface (UI) 560, such as for example further described herein. Additional or alternative components and/or information flows may be used in different embodiments of the invention.

Some embodiments of the invention may include defining and using a threat detection model (may also be simply referred to as a "model") - which may refer to a plurality of correlated or integrated information items and/or to settings associated with data structures and methods for reporting runtime information, and/or to methods or standards for correlating or integrating information from different sources, and/or to standards set or defined for identifying threats. In some embodiments, a model may be defined and/or stored as a protocol buffer or a plurality of protocol buffers in .proto files, and the relevant methods may be defined as gRPC services in .proto files. Additional or alternative formats for defining and/or storing of models may be used in different embodiments.

Some embodiments may include identifying, based on the correlating of information items, a risky execution of a computer application. For example, a model according to some embodiments of the invention may consider event data or information items (which may for example be correlated among different entities such as for example described herein) and may determine that a given computer process, task, or application may behave unexpectedly or may use wrong configurations, and thus may represent a risk to the system. In some embodiments, identifying a risky execution of a computer application may comprise determining a location of one or more software artifacts based on the correlating the collected information items.

For example, a process on a monitored runtime environment may download an external file and load or access it. The agent or sensor monitoring the runtime environment may detect that the file was accessed and may collect runtime information to report the event, which may include the file's digest and metadata (e.g. file path or location, name), and/or additional information describing the process (e.g., what user, entity, or server initiated the process). This information may be sent and/or used and/or correlated, for example, every n seconds (e.g. n is an integer), in a runtime service or platform - together with additional information from other sensors or agents, such as for example information from a Kubernetes cluster controller (which may be collected every 2n seconds and may describe, for example, the performance or resources used by the cluster as a whole), and information from security systems or platforms such as for example JFrog Xray and JFrog Artifactory. Based on the correlating of information items, a risky execution of a computer application may be identified: for example, the accessed file, which may not have initially been part of, e.g., a container image external to the monitored runtime environment, some parts of the file may be identified or determined (for example by examining or scanning the file using JFrog Xray) as including malicious code, and thus representing a risk. The information from the controller may allow the runtime service to provide additional contextual information, such as for example information describing a location and/or node and/or machine on which the process may be running and who (e.g., what entity or user) deployed it, or some of its components, into the runtime environment. The information from security platforms such as, e.g., the JFrog Artifactory platform, may provide knowledge describing the relevant container image and the impacted executable - the software component lineage, owner, etc.

The correlated information may enable performing automated actions to mitigate discovered vulnerabilities (e.g. risks), such as for example, terminating a process if one or more conditions are met that may indicate that the threat is severe (in one nonlimiting example - if the malicious code or suspicious file are suspected, according to be some of the correlated information, to be hazardous, and if the relevant container image is of high importance and/or associated with a plurality of processes that their termination may prove particularly harmful, and if the process accessing the suspicious file was deployed by a user having low level of credentials, embodiments may, for example, send or transmit a command to the relevant node to shut down the node and prevent harmful consequences which may be irreversible). Additional or alternative examples for information that may be correlated from different components or sources, as well as for different conditions or criteria in a relevant model based on which automated actions may be taken, may be included in different embodiments of the invention.

Based on a threat detection model defined and/or used such as for example described herein, some embodiments may identify a potential risk to a relevant computer system, and may for example create a report or database entry describing the relevant event, and/or take or perform automated actions such as for example further described herein.

Once threats or vulnerabilities are found, some embodiments may determine and/or indicate a level of severity or priority for a given threat, and/or for a corresponding process, and/or machine or node (based on which, e.g., automated actions may be performed - see further discussion herein). For example, following example use cases provided herein, where a file with malicious code was detected, contextual analysis which may be performed based on, in combination with, or using information for a security platform such as, e.g., the JFrog Xray platform, may allow a model according to some embodiments of the invention to assign a low or mild priority to the discovered threat or vulnerability, for example based on the malicious code not being accessed or accessible by a relevant executed process in the runtime environment (for example in case processes currently running on the cluster do not or cannot access the file that was found to be malicious; similarly, if currently running processes do access suspicious files found to include malicious code, embodiments may assign a high priority to the discovered threat, and so forth).

Additional or alternative examples for detection and/or identification and/or prioritization of threats and vulnerabilities using a threat detection model according to different embodiments of the invention may be realized.

Based on determined priorities, some embodiments may prioritize the handling of some threats over others. In one nonlimiting example, embodiments may perform automated computerized actions such as for example terminating a process, or shutting down a node or machine for which a severe or high priority threat was detected, and may for example suspend the process but not shut down a node or machine for a process for which a less severe, or low priority threat was detected. Additional or alternative examples may be realized and used in different embodiments.

Some embodiments of the invention may include preventing access to a computer file based on the determined location.

In one nonlimiting example for automated computer actions, some embodiments may for example prevent or block access to a computer file or data item based on a location determined as part of the identifying of a risky execution of a computer process - which may be performed for example according to the protocols and procedures described herein.

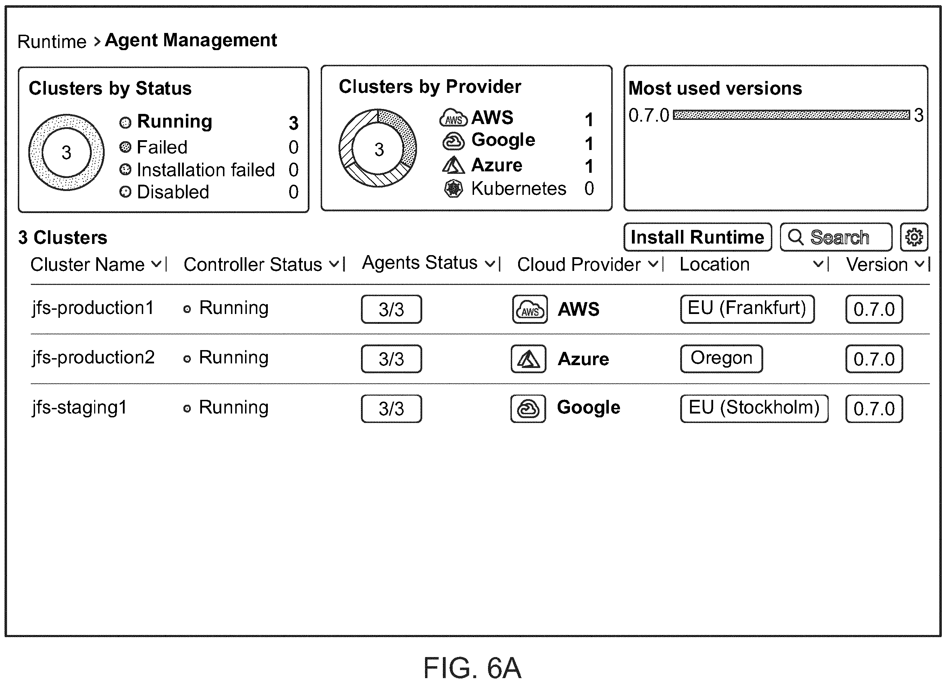

Figs. 6A-C show example runtime security information provided according to some embodiments of the invention. In some embodiments, information collected from a runtime environment may describe a plurality of computerized clusters and may include, e.g., cluster names, a status of a given cluster or cluster controller (such as, e.g., running, disabled, and the like), a cloud provider associated with the cluster (such as, e.g., Amazon Web Services (AWS), Microsoft Azure, and the like), a physical location of the cluster (such as, e.g., Frankfurt, Oregon, Stockholm, and the like) and a version of the runtime service or agents used according to embodiments of the invention.

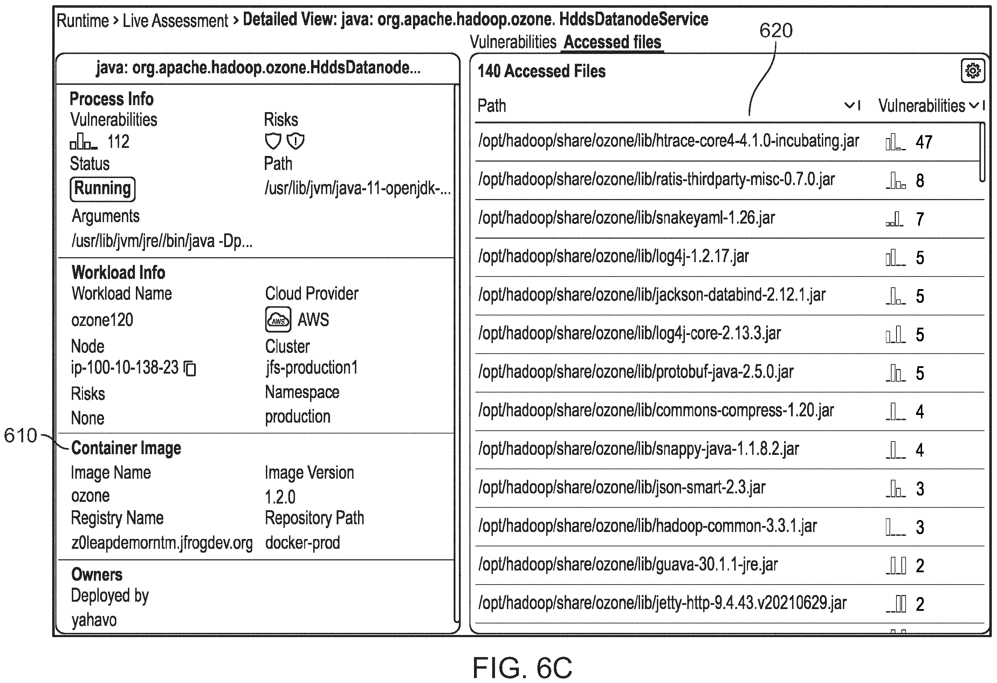

Some embodiments may collect and document data or information items describing a plurality of workloads and/or processes monitored by the runtime service (which may be running on a plurality of computerized clusters on which software agents may be deployed, such as for example described herein). In some nonlimiting example embodiments, a workload may have multiple running processes - where each process may be running, for example, on a different node within the cluster. Workload or process information may for example describe or list the runtime entities, as well as associated disk images, repositories, detected or suspected vulnerabilities, risks, and the like (as may for example be determined according to additional information from additional components or agents such as, e.g., the JFrog Artifactory and/or Xray components). As may be seen in the example provided in Fig. 6C, some examples for information describing software components and/or files deployed or used in the runtime environment collected and provided by some embodiments of the invention may relate to a software artifact or component such as for example a given disk or container image 610 (which may for example already be registered or recognized, e.g., by means of SCA), may indicate whether the image is actively used in runtime (as may be detected or monitored using a software agent such as for example described herein) and may show what instances, nodes, or machines in the runtime environment are using this image. Other examples for information describing software components and/or files deployed or used in the runtime environment may relate to a plurality of files 620 accessed as part of a process or relating to a given workload handled by the runtime environment, and may for example indicate how many files were accessed as part of handling a given process or workload. Additional or alternative software artifacts, as well as examples for artifacts used in various processes may be included or used in different embodiments.

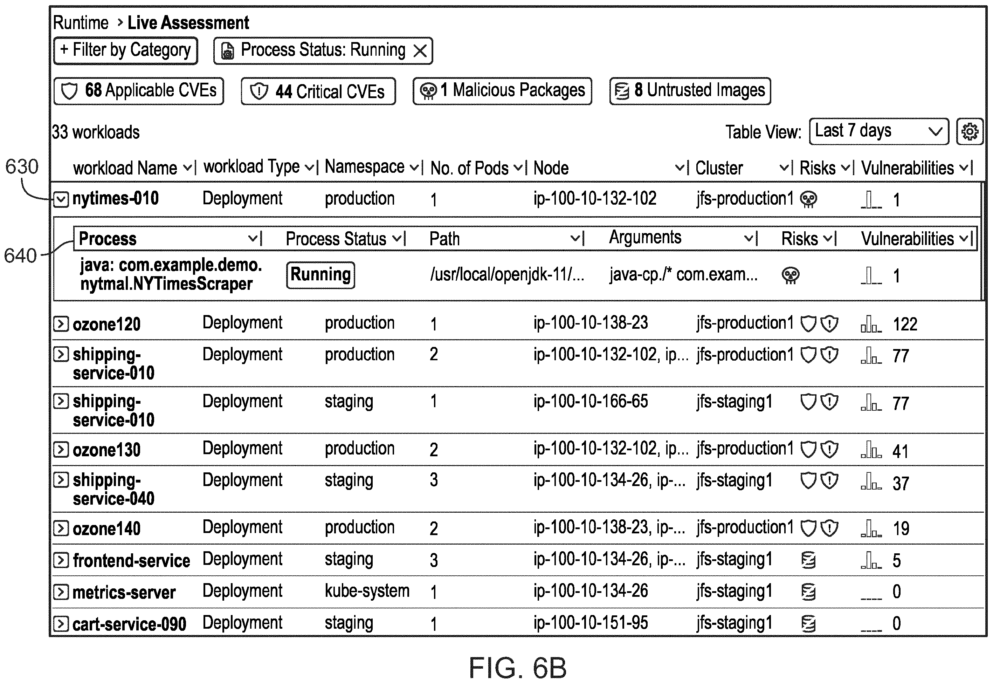

In the specific nonlimiting example shown in Fig. 6B, a workload 630 may be suspected to be associated with a malicious package, and the underlying running process 640 that may be using or running the malicious package is specified. Additional information that may be collected or documented and/or provided or used by embodiments of the invention may be or may include, for example, details describing relevant processes and software artifacts (as may for example be collected from JFrog Artifactory), artifact build owners, and an entity or used who deployed the artifact to the runtime environment, and the like - as well as details describing the deployment or runtime environment such as for example the node running the process, the disk image used, and the like - which may for example be collected by software agents deployed on a given cluster such as for example described herein.

In some embodiments, at least some vulnerabilities may be identified or detected using information from SCA, which may or may not be correlated or integrated with runtime information such as for example described herein. For a running process, embodiments may document or list a plurality of files accessed by that process, and the vulnerabilities detected identified for that file - for example based on runtime information enriched by information from additional components (such as for example JFrog Xray). Some embodiments may thus indicate or identify the relevant container or disk image a given file may be associated with, its name, version, and the like - and provide, e.g., relevant repository and registry information associated with the file.

In some embodiments of the invention, collected or processed information may be included in a report and be displayed on a dashboard or UI, such as for example according to some or all of the figures herein - which may allow an analyst or security officer to determine whether security protocols or related actions should be executed based on the report and/or the collected or processed (e.g., integrated) information. Dashboards and UIs different from those presented in the figures herein may be used in different embodiments.

Some embodiments of the invention may include transmitting an alert to a computer system separate from the processor, the transmitting using a secure gRPC connection.

In one nonlimiting example, upon discovering a threat or a risky execution of a computer process according to the various protocols and procedures described herein, embodiments may transmit an alert or a notification to a remote computer system (which may be, e.g., physically separate from the processor used for carrying out the protocols and procedures described herein), where it may for example be displayed on a UI. In some embodiments, the transmitting of an alert may be performed, e.g., using a secure gRPC connection. Additional or alternative communication protocols and/or infrastructures may be used in different embodiments.

Embodiments of the invention may improve software management technologies by providing real-time runtime security information and features in runtime environments, and integrating dynamic runtime security information with "static" information describing software artifacts - allowing to secure and manage such artifacts across their development lifecycle. Capabilities and features provided by embodiments of the invention may offer a holistic view of software components, from their development to their deployment in diverse runtime environments.

Non-limiting example use cases and improvements to previous technologies provided by some embodiments of the invention are further discussed herein. One skilled in the art of software lifecycle management and security scanning would recognize additional or alternative use cases may be realized according to different embodiments, including, e.g., different system or platform components.

As described herein, some embodiments may offer or provide enhanced threat detection and prioritization capabilities. For example, embodiments may include integrating runtime security information with, e.g., JFrog Xray's scanning results, which may enable the platform to focus on the most pertinent threats by correlating security data with data or information concerning software components in the runtime environment. Some embodiments may enable or provide prioritization of threats based on their real-world impact within the runtime environment - which may for example allow security protocols to focus on vulnerabilities and malicious packages in the runtime environment, which may be the most critical and should be handled urgently and effectively. Accordingly, threat detection protocols performed according to some embodiments may improve security operation and protocol efficiency by prioritizing and focusing efforts on more crucial and significant threats to relevant computer systems.

Some embodiments of the invention may allow for quick resolutions for runtime detected artifacts. For example, correlations and integrations of data and/or information items such as for example described herein may simplify the identification and analysis of runtime-detected artifacts within, e.g., a platform such as for example JFrog Artifactory, or a different security related software platform, protocol, or suite. Correlations and integrations according to some embodiments of the invention may provide immediate insights into a given software artifact's provenance and remediation options, enabling swift corrective measures to mitigate security risks and, for example, reducing downtime needed for handling threats, or resulting from threats.

Some embodiments may allow for efficient streamlined communication and resolution processes. In some example use cases, and as known in the art of software lifecycle management, specific software components may be associated with a plurality of corresponding build processes and responsible personnel. Analyzing or considering runtime information and associating relevant data or information items to specific processes and/or components by embodiments of the invention may thus accelerate the resolution of security findings - for example by automatically sending notifications or reports to relevant personnel associated with a specific process or task for which a threat is detected, or by performing automated actions relating to that specific process (such as, e.g., suspending or terminating that process). In some example use cases, embodiments may facilitate communication between security operations and development teams by identifying and focusing on specific software components in the runtime environment, which may lead to faster remediation of identified security issues.

Some embodiments may provide real-time visibility into software artifact status. For example, based on, e.g., the various protocols and procedures described herein - embodiments may provide instant visibility into the runtime status of relevant software artifacts and/or computerized components, indicating their operational state and security status. Continuous monitoring of artifacts' security and operational conditions (such as for example once in a predetermined time interval, e.g., every 30 seconds) may enable proactive risk management and may ensure that security practices are up-to-date and highly responsive.

Some embodiments may allow for identification of non-compliant software components. For example, identifying software components that may not comply with corporate software supply chain standards, such as untrusted registries and repositories, may point to or indicate potential compliance and security risks. Some embodiments may offer mechanisms to address these issues (which may for example consider both runtime and SCA information), which may ensure that deployments adhere to organizational policies and procedures, thereby safeguarding the integrity of the software supply chain.

Some embodiments may allow for signature matching for enhanced security. For example, signature verification of some software components, such as for example container images, against signatures and/or identifies generated or used by different embodiments may add an extra layer of security - for example by requiring the deployment, or enabling the execution of only authenticated and approved components (e.g., for which the two signatures or identifiers were specified or added to a list or database of allowed or of trustworthy components), and, e.g., by terminating processes or tasks for which components may not be trustworthy. This may enhance trustworthiness of a given software supply chain.

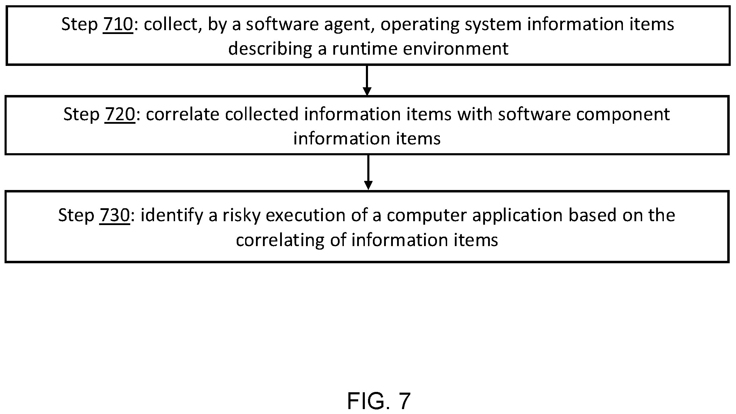

Fig. 7 shows an example method for runtime detection of threats to a computerized system according to some embodiments of the invention. In step 710, some embodiments may collect, by a software agent, a plurality of operating system information items describing a runtime environment. Embodiments may correlate collected information items with a plurality of software component information items, where some software component information items may describe, e.g., some software components and/or files deployed or used in the runtime environment (step 720). Embodiments may identify a risky execution of a computer application based on the correlating of information items, (step 730). Additional or alternative steps may be included in different embodiments of the invention.

Embodiments of the invention may provide the advantage of detecting malicious software prior to execution, thereby reducing or removing a risk of data corruption, physical damage (e.g. forced overheating of components), dissemination of confidential information or the like. Automated actions may be taken to remotely shut down or disconnect a compromised machine or node containing malicious software, thereby preventing a cluster of interconnected nodes or machines from being affected.

One skilled in the art will realize the invention may be embodied in other specific forms without departing from the spirit or essential characteristics thereof. The embodiments described herein are therefore to be considered in all respects illustrative rather than limiting. In detailed description, numerous specific details are set forth in order to provide an understanding of the invention. However, it will be understood by those skilled in the art that the invention can be practiced without these specific details. In other instances, well-known methods, procedures, and components, modules, units and/or circuits have not been described in detail so as not to obscure the invention.

Embodiments may include different combinations of features noted in the described embodiments, and features or elements described with respect to one embodiment or flowchart can be combined with or used with features or elements described with respect to other embodiments.

Although embodiments of the invention are not limited in this regard, discussions utilizing terms such as, for example, "processing," "computing," "calculating," "determining," "establishing", "analyzing", "checking", or the like, can refer to operation(s) and/or process(es) of a computer, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that can store instructions to perform operations and/or processes.

The term set when used herein can include one or more items. Unless explicitly stated, the method embodiments described herein are not constrained to a particular order or sequence. Additionally, some of the described method embodiments or elements thereof can occur or be performed simultaneously, at the same point in time, or concurrently. The description also includes the subject matter of the following clauses:
Clause 1. A computerized method of runtime detection of threats to a computer system, the method comprising, using a computer processor:
   collecting, by a software agent, one or more operating system information items, the collected information describing a runtime environment;
   correlating the collected information items with one or more software component information items, wherein one or more of the software component information items describe one or more components deployed in the runtime environment; and
   identifying, based on the correlating of information items, a risky execution of a computer application.
Clause 2. The method of Clause 1, wherein one or more of the collected information items describe a plurality of kernel events, the events including at least one of: a process initiation event, a process termination event, and an open file event.
Clause 3. The method of Clause 1, wherein the runtime environment is a Kubernetes cluster, and wherein the method comprises:
   matching one or more of the collected information items with second information items collected from one or more second agents, the matching comprising associating one or more process information items with one or more container information items.
Clause 4. The method of Clause 3, wherein one or more of the second agents is a Kubernetes runtime controller, and wherein one or more of the second information items describe at least one of: a pod, a workload, and a node.
Clause 5. The method of Clause 4, wherein at least one of: the software agent, and the one or more second agents are installed on each of a plurality of nodes, the plurality of nodes supervised by the Kubernetes runtime controller.
Clause 6. The method of Clause 1, comprising transmitting an alert to a computer system separate from the processor, the transmitting using a secure gRPC connection.
Clause 7. The method of Clause 1, wherein the identifying a risky execution of a computer application comprises determining a location of one or more software artifacts based on the correlating of the collected information items.
Clause 8. The method of Clause 7, comprising preventing access to a computer file based on the determined location.
Clause 9. A computerized system for runtime detection of threats to a computer system, the system comprising:
   a memory,
   and a computer processor configured to:
      collect, by a software agent, one or more operating system information items, the collected information describing a runtime environment;
      correlate the collected information items with one or more software component information items, wherein one or more of the software component information items describe one or more components deployed in the runtime environment; and
      identify, based on the correlating of information items, a risky execution of a computer application.
Clause 10. The computerized system of Clause 9, wherein one or more of the collected information items describe a plurality of kernel events, the events including at least one of: a process initiation event, a process termination event, and an open file event.
Clause 11. The computerized system of Clause 9, wherein the runtime environment is a Kubernetes cluster, and wherein the computer processor is configured to:
   match one or more of the collected information items with second information items gathered from one or more second agents, the matching comprising associating one or more process information items with one or more container information items.
Clause 12. The computerized system of Clause 11, wherein one or more of the second agents is a Kubernetes runtime controller, and wherein one or more of the second information items describe at least one of: a pod, a workload, and a node.
Clause 13. The computerized system of Clause 12, wherein at least one of: the software agent, and the one or more second agents are installed on each of a plurality of nodes, the plurality of nodes supervised by the Kubernetes runtime controller.
Clause 14. The computerized system of Clause 9, wherein the computer processor is configured to transmit an alert to a computer system separate from the computer processor, the transmitting using a secure gRPC connection.
Clause 15. The computerized system of Clause 9, wherein the identifying a risky execution of a computer application comprises determining a location of one or more software artifacts based on the correlating the collected information items.
Clause 16. The computerized system of Clause 15, wherein the processor is to prevent access to a computer file based on the determined location.
Clause 17. A computerized method of runtime environment security, the method comprising, using a computer processor:
   gathering, by a software agent, one or more operating system data items, the gathered data describing a plurality of kernel events in a computerized runtime environment;
   integrating the collected data items with one or more software component analysis information items, wherein one or more of the software component analysis information items describe one or more artifacts included in the runtime environment; and
   detecting, based on the integrating of information items, a threat to the runtime environment.
Clause 18. The method of Clause 17, wherein the method comprises: associating one or more of the gathered information items with second information items collected from one or more second agents, the associating between one or more process information items and one or more container information items.
Clause 19. The method of Clause 17, wherein the detecting of a threat to the runtime environment comprises determining a location of one or more of the artifacts based on the integrating of the gathered information items.
Clause 20. The method of Clause 19, comprising blocking access to a computer file based on the determined location.

## Claims

1. A computerized method of runtime detection of threats to a computer system, the method comprising, using a computer processor:
collecting, by a software agent, one or more operating system information items, the collected information describing a runtime environment;
correlating the collected information items with one or more software component information items, wherein one or more of the software component information items describe one or more components deployed in the runtime environment; and
identifying, based on the correlating of information items, a risky execution of a computer application.

2. The method of claim 1, wherein one or more of the collected information items describe a plurality of kernel events, the events including at least one of: a process initiation event, a process termination event, and an open file event.

3. The method of claim 1, wherein the runtime environment is a Kubernetes cluster, and wherein the method comprises:
matching one or more of the collected information items with second information items collected from one or more second agents, the matching comprising associating one or more process information items with one or more container information items.

4. The method of claim 3, wherein one or more of the second agents is a Kubernetes runtime controller, and wherein one or more of the second information items describe at least one of: a pod, a workload, and a node.

5. The method of claim 4, wherein at least one of: the software agent, and the one or more second agents are installed on each of a plurality of nodes, the plurality of nodes supervised by the Kubernetes runtime controller.

6. The method of claim 1, comprising transmitting an alert to a computer system separate from the processor, the transmitting using a secure gRPC connection.

7. The method of claim 1, wherein the identifying a risky execution of a computer application comprises determining a location of one or more software artifacts based on the correlating of the collected information items.

8. The method of claim 7, comprising preventing access to a computer file based on the determined location.

9. A computerized system for runtime detection of threats to a computer system, the system comprising:
a memory,
and a computer processor configured to:
collect, by a software agent, one or more operating system information items, the collected information describing a runtime environment;
correlate the collected information items with one or more software component information items, wherein one or more of the software component information items describe one or more components deployed in the runtime environment; and
identify, based on the correlating of information items, a risky execution of a computer application.

10. The computerized system of claim 9, wherein the computer processor is configured to carry out the method of any of claims 2, 6, 7, or 8.

11. The computerized system of claim 9, wherein the runtime environment is a Kubernetes cluster, and wherein the computer processor is configured to:
match one or more of the collected information items with second information items gathered from one or more second agents, the matching comprising associating one or more process information items with one or more container information items.

12. The computerized system of claim 11, wherein one or more of the second agents is a Kubernetes runtime controller, and wherein one or more of the second information items describe at least one of: a pod, a workload, and a node, and
wherein at least one of: the software agent, and the one or more second agents are installed on each of a plurality of nodes, the plurality of nodes supervised by the Kubernetes runtime controller.

13. A computerized method of runtime environment security, the method comprising, using a computer processor:
gathering, by a software agent, one or more operating system data items, the gathered data describing a plurality of kernel events in a computerized runtime environment;
integrating the collected data items with one or more software component analysis information items, wherein one or more of the software component analysis information items describe one or more artifacts included in the runtime environment; and
detecting, based on the integrating of information items, a threat to the runtime environment.

14. The method of claim 17, wherein the method comprises:
associating one or more of the gathered information items with second information items collected from one or more second agents, the associating between one or more process information items and one or more container information items.

15. The method of claim 17, wherein the detecting of a threat to the runtime environment comprises determining a location of one or more of the artifacts based on the integrating of the gathered information items, and blocking access to a computer file based on the determined location.
